# EUROPÄISCHE PATENTSCHRIFT

(11) **EP 0 940 334 B1**
(45) Veröffentlichungstag und Bekanntmachung des Hinweises auf die Patenterteilung: **14.07.2004**
(21) Anmeldenummer: 99101830.0
(22) Anmeldetag: 28.01.1999
(51) Int. Cl.: B62M 25/04

(54) **Schalter für Fahrradgetriebe**
Shifting apparatus for bicycle change-speed device
Dispositif de commande pour dérailleur de bicyclette

(30) Priorität: 04.03.1998 DE 19809113
(43) Veröffentlichungstag der Anmeldung: 08.09.1999
(60) Teilanmeldung: 04010917.5
(73) Patentinhaber: SRAM Deutschland GmbH, 97404 Schweinfurt (DE)
(72) Erfinder: Arbeiter, Markus, Dipl.-Ing., 97070 Würzburg (DE); Assel, Martin, 91593 Burgbernheim (DE)

(56) Entgegenhaltungen:
- EP-A1- 0 472 739
- EP-A1- 0 615 896
- EP-A1- 0 671 317
- EP-A2- 0 361 335

## Beschreibung

Die Erfindung betrifft einen Schalter für Fahrradgetriebe gemäß dem Oberbegriff des Anspruchs 1.

Mit der EP 0 352 733 B1 ist ein Schalter für Fahrradgetriebe bekannt geworden, bei dem man es sich zur Aufgabe gemacht hat, einen verbesserten Schalter zu schaffen, bei dem es sich um einen Triggerschalter handelt, bei welchem sich das Aufwickeln des Zugseils gegen die Feder des Fahrradgetriebes und die Freigabe des Zugseils durch einen Rastmechanismus durch die Betätigung eines einzigen Hebels bewerkstelligen läßt. Gelöst wird diese Aufgabe mit einem Betätigungshebel, der zum Spannen des Zugseils um eine Mittelachse drehbar gelagert ist, wobei von Gangstufe zu Gangstufe eine Rasteinrichtung pro Schaltstufe durchfahren wird, die mit einem Freigabehebel derart entlastet werden kann, daß der Betätigungshebel vom Zugseil in die nachfolgende Raststufe für die nachfolgende Gangstufe zurückgezogen wird. Der Freigabehebel ist integraler Bestandteil des Betätigungshebels, wobei der Freigabehebel in einer Ebene bedient wird, die senkrecht zu der Bedienungsebene des Betätigungshebels steht. Die Drehachse für den Freigabehebel ist in den Betätigungshebel integriert und läuft beim Schalten der einzelnen Gangstufen um die Mittelachse des Betätigungshebels mit um, so daß in den Extremstellungen des Schalters zwischen den Gangstufen der Berggänge und den Gangstufen der Schnellgänge jeweils Positionen für den Betätigungshebel erreicht werden, die in einem für die Ergonomie des Schaltens ungünstigen Bereich angesiedelt sind.

Die vorgeschlagene Erfindung weist demgegenüber eine Trennung von Betätigungshebel und Freigabehebel auf, mit dem Ziel die Schaltungen unabhängig von der Gangstufe immer an der gleichen Position des Betätigungshebels sowie des Freigabehebels durchzuführen. auf diese Weise ist es auch möglich, insbesondere den Freigabehebel mit ergonomischer Ausgestaltung des gehäusefernen Endes zu versehen, wodurch es möglich wird, insbesondere auch dann, wenn der Fahrer den dem Schalter benachbarten Bremshebel betätigt, auch noch den Freigabehebel zur gleichen Zeit durch Antippen des gehäusefernen Endes des Freigabehebels mit einem für den Bremsvorgang nicht herangezogenen Finger zu betätigen.

In EP 0 361 335 ist ein Hebelschalter für eine Fahrradgangschaltung gezeigt, der über einen Betätigungshebel zum Spannen des Zugseiles und einen Freigabehebel zum schrittweisen Freigeben des Zugseiles verfügt. Der Freigabehebel wirkt mit einer Freigabemechanik zusammen, zu der eine Halte- und eine Freigabeklinke gehören, die abwechselnd in Verzahnungen am Betätigungsteil eingreifen, wodurch das Zugseil schrittweise freigegeben wird. Die Halte- und die Freigabeklinke schwenken unabhängig vom Freigabehebel, je nachdem wie die Lücken zwischen den Zähnen am Betätigungsteil das zulassen. Der Betätigungshebel, der Freigabehebel, die Klinken und das Betätigungsteil drehen sich um Drehachsen, die parallel zueinander angeordnet sind.

In EP 0 671 317 liegt ein mit EP 0 361 335 vergleichbarer Mechanismus vor, mit Halte- und Freigabeklinken zum schrittweisen Freigeben des Zugseiles. Die Drehachsen der Komponenten des Mechanismus zum Spannen und Freigeben des Zugseiles sind parallel zueinander angeordnet. Als Betätigungselement zum Spannen des Zugseiles dient ein Drehgriff. Ein Freigabehebel weist eine Drehachse auf, die senkrecht zur Drehachse des Drehgriffes angeordnet ist.

Es ist daher die Aufgabe der Erfindung, einen Schalter zur Betätigung eines Fahrradgetriebes zu schaffen, dessen Betätigungselemente, insbesondere ein Betätigungshebel sowie ein Freigabehebel für alle Gangstufen in jeweils der ergonomisch optimalen Position stehen und sich nach der jeweiligen Betätigung in diese zurückbewegen.

Die Lösung ist im Kennzeichen des Anspruchs 1 sowie in den Unteransprüchen beschrieben. Anhand mehrerer Zeichnungen wird ein Schalter mit den in der Aufgabe beschriebenen Merkmalen dargestellt. Es zeigen:

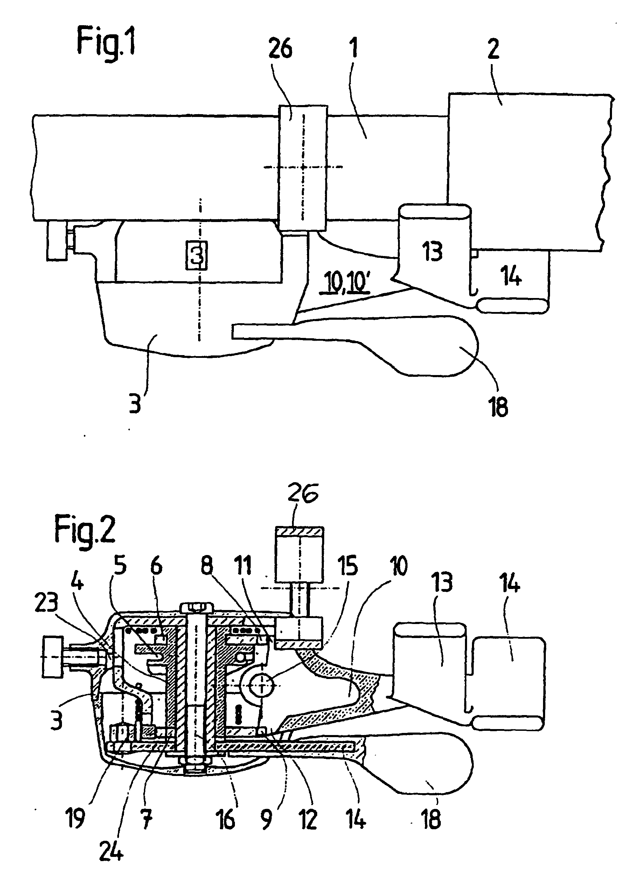

- Figur 1: einen Schalter an einem Lenker für ein Fahrrad mit einem Gehäuse, einem Betätigungshebel und einem Freigabehebel;
- Figur 2: den Schalter mit einem Betätigungsteil um eine Mittelachse mit einer Aufwickelnut für ein Zugseil und mit einer ersten Rastscheibe sowie einer zweiten Rastscheibe im Schnitt;
- Figur 3: den Schalter mit einer ersten Grifftaste und einer zweiten Grifftaste, die mit dem Freigabehebel am gehäusefernen Ende verbunden sind;
- Figur 4: den Freigabehebel mit einer ersten Rastnase und einer zweiten Rastnase für den Eingriff in ein erstes und ein zweites Rastzahnsegment der ersten und zweiten Rastscheibe;
- Figur 5: den Freigabehebel mit einer Halteklinke mit einer Rastnase zum Zusammenwirken mit dem zweiten Rastzahnsegment des Betätigungsteils;
- Figur 6: den Betätigungshebel mit einer gehäuseseitig aussteuerbaren Klinke zum Zusammenwirken mit einer Verzahnung an der zweiten Rastscheibe.

Wird mit 1 der Lenker eines Fahrrades bezeichnet, so ist auf diesem ein Griffteil 2 als Platz für die Hand des Fahrradfahrers angeordnet. Ein Schalter 3 ist mittels einer Schelle 26 an dem Lenker befestigt, wobei das Gehäuse 3 im wesentlichen unterhalb des Lenkers 1 angeordnet ist. Im Inneren des Gehäuses 3 ist eine Mittelachse 16 angeordnet, um die sich ein Betätigungsteil 4 drehen kann, an welchem eine Aufwickelnut 5 für ein Zugseil angebracht ist, welches mit einem Fahrradgetriebe verbunden ist und in das Gehäuse 3 über eine Öffnung 23 einlaufen kann. Am oberen Ende des Betätigungsteils 4 ist eine erste Rastscheibe 6 mit einem ersten Rastzahnsegment 8 angeordnet, während am unteren lenkerfernen Ende des Betätigungsteils 4 eine zweite Rastscheibe 7 mit einem zweiten Rastzahnsegment 9 und einer Verzahnung 24 angeordnet ist. Um die Mittelachse 16 ebenfalls drehbar angeordnet ist ein Betätigungshebel 17 mit einem Griffteil 18, wobei an dem Betätigungshebel 17 eine Klinke 19 drehbar angeordnet und gegen die Verzahnung 24 angefedert ist.

In einer gehäusefesten Drehachse 15 ist ein Freigabehebel 10 schwenkbar angeordnet und weist an seinem dem Betätigungsteil 4 zugewandten Ende eine erste Rastnase 11 und eine zweite Rastnase 12 auf, wobei die erste Rastnase 11 mit dem ersten Rastzahnsegment 8 und die zweite Rastnase 12 mit dem zweiten Rastzahnsegment 9 zusammenwirken. Die Drehachse 15 ist im wesentlichen senkrecht zu der Mittelachse 16 angeordnet, wobei der Abstand der Drehachse 15 von der Mittelachse 16 in etwa dem Radius der Rastzahnsegmente 8 und 9 entspricht. Ferner ist die Position der Drehachse 15 durch einen im wesentlichen gleichen Abstand vom ersten Rastzahnsegment 8 und vom zweiten Rastzahnsegment 9 definiert. Der Freigabehebel 10 ist durch eine hier nicht näher dargestellte Feder in der Weise vorgespannt, daß die zweite Rastnase 12 zum Eingriff mit dem zweiten Rastzahnsegment 9 kommt. In dieser Position liegt der Freigabehebel 10 an einem Anschlag des Gehäuses 3 an.

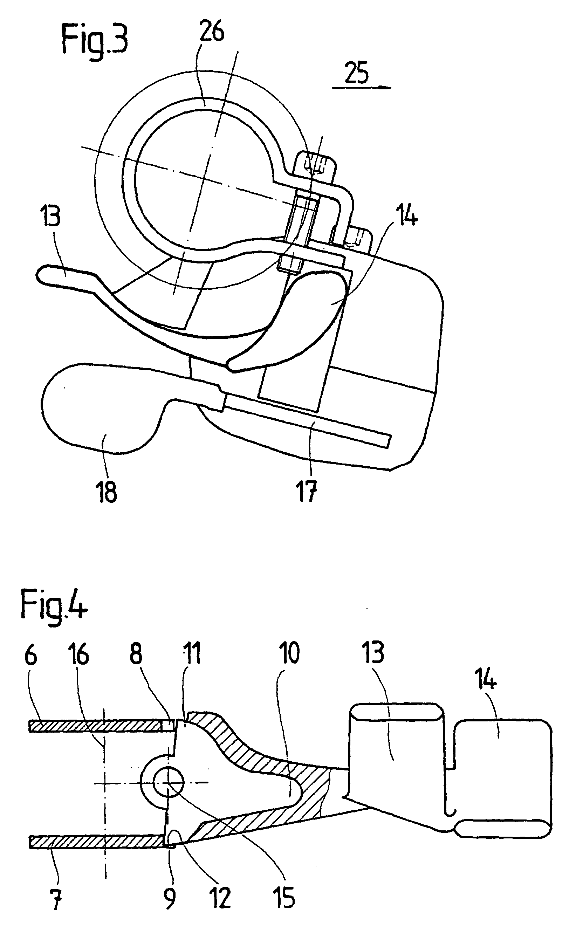

Das gehäuseferne Ende des Freigabehebels 10 mündet in einer ersten Grifftaste 13 und einer zweiten Grifftaste 14, wobei gemäß Fig. 3 die erste Grifftaste 13 in einer Fahrtrichtung 25 gesehen dem Lenker 1 nacheilend und die zweite Grifftaste 14 in Fahrtrichtung 25 voreilend angeordnet sind. In Ruhestellung des Freigabehebels 10 lassen sich die Grifftasten 13 und 14 gemeinsam nach oben bis maximal zum Anschlag an den Griffteil 2 des Lenkers 1 bewegen, wobei die zweite Rastnase 12 des Freigabehebels 10 außer Eingriff mit dem zweiten Rastzahnsegment 9 kommt, während die erste Rastnase 11 des Freigabehebels 10 mit dem ersten Rastzahnsegment 8 in Eingriff kommt.

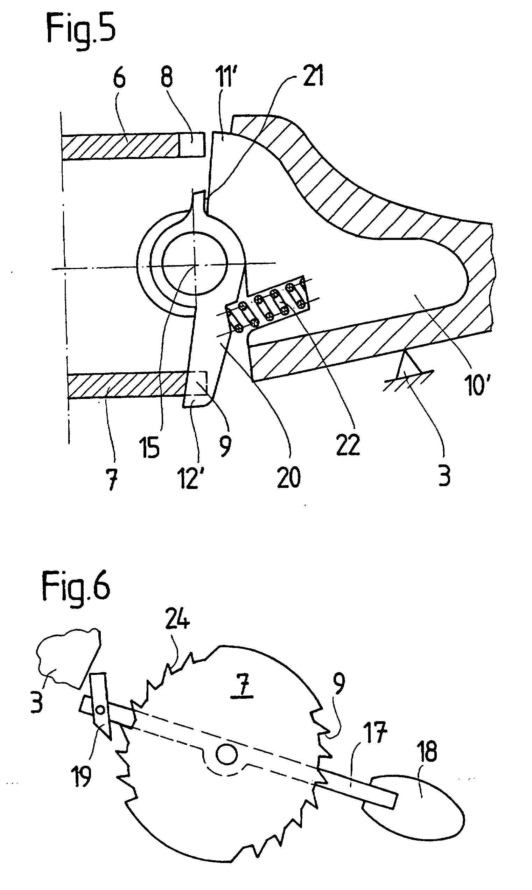

Da sich gemäß Fig. 6 die Klinke 19 mit der Verzahnung 24 nicht in Eingriff befindet, wird das Betätigungsteil 4 von der Rückstellfeder im Fahrradgetriebe zurückgedreht, so daß die im Eingriff befindliche zweite Rastnase 12 im zweiten Rastzahnsegment 9 die Rückdrehung des Betätigungsteils 4 und somit den Auslauf des Zugseils verhindert. Beim Betätigen des Freigabehebels 10 durch Berührung einer der Grifftasten 13 oder 14 wird die zweite Rastnase 12 außer Eingriff mit dem zweiten Rastzahnsegment 9 gebracht, während die erste Rastnase 11 bereits in Eingriff mit dem ersten Rastzahnsegment 8 wenigstens teilweise gekommen ist, wodurch der Betätigungsteil 4 um etwa eine halbe Gangstufe verdreht worden ist. Die Rastzahnsegmente 8 und 9 sind durch die spitze Form ihrer Zähne derart aufeinander abgestimmt, daß der wechselweise Eingriff der ersten Rastnase 11 in das erste Rastzahnsegment 8 ohne Totgang mit dem Eingriff der zweiten Rastnase 12 in das zweite Rastzahnsegment 9 erfolgen kann, wodurch bei Freigabe des Freigabehebels 10 durch Loslassen der ersten Grifftaste 13 bzw. der zweiten Grifftaste 14 das Zurückschalten von einer ersten in eine zweite Gangstufe bewirkt wird.

Gemäß Fig. 5 ist das Zusammenwirken eines Freigabehebels 10' mit der ersten Rastscheibe 6 und der zweiten Rastscheibe 7 dargestellt, wobei eine erste Rastnase 11' mit dem ersten Rastzahnsegment 8 der ersten Rastscheibe 6 zusammenwirkt, während eine zweite Rastnase 12' mit dem zweiten Rastzahnsegment 9 der zweiten Rastscheibe 7 zusammenwirkt. Aus Funktionsgründen ist die zweite Rastnase 12' auf einer Halteklinke 20 angeordnet, die über eine Feder 22, einen Anschlag 21 sowie über die gemeinsame Drehachse 15 mit dem Freigabehebel 10' verbunden ist. Während der Freigabehebel 10' am Gehäuse 3 angefedert ist und sich somit in Ruhestellung befindet, wird die Halteklinke 20 durch die Feder 22 mit der zweiten Rastnase 12' gegen das zweite Rastzahnsegment 9 angefedert, wobei die Anfederungskraft des Freigabehebels 10' gegen das Gehäuse 3 größer ist, als die Anfederungskraft der Feder 22 auf die Halteklinke 20.

Wird durch Verdrehen des Betätigungshebels 17 die Klinke 19 in Eingriff mit der Verzahnung 24 gebracht, so läßt sich mit dem Betätigungshebel 17 die zweite Rastscheibe 7 verdrehen, wodurch sich die Halteklinke 20 mit seiner zweiten Rastnase 12' über die einseitig angeschrägten Zähne des zweiten Rastzahnsegmentes 9 bewegt, ohne daß der Freigabehebel 10 aus seiner Ruhestellung herausgeführt wird. Beim Zurückführen des Betätigungshebels 17 in die Ausgangsposition mit ausgesteuerter Klinke 19 bleibt die zweite Rastscheibe 7 an der Position hängen, die der Eingriff der zweiten Rastnase 12' der Halteklinke 20 im zweiten Rastzahnsegment 9 vorgibt.

Der Vorteil der Erfindung liegt in der einfachen Betätigbarkeit des Betätigungshebels 17 sowie des Freigabehebels 10 oder 10', wobei auf die Ergonomie der Hebelausführung Rücksicht genommen wurde und wobei das Fahrradgetriebe unter allen Umständen schaltbar ist, auch wenn die Betätigungshand des Fahrers durch andere Bewegungen, beispielsweise durch Betätigung eines Bremshebels, in Anspruch genommen ist.

## Patentansprüche

1. Schalter für Fahrradgetriebe, umfassend einen um eine gehäusefeste Mittelachse (16) drehbar angeordneten Betätigungshebel (17) zur Steuerung eines im Gehäuse (3) ebenfalls drehbar um die Mittelachse (16) angeordneten Betätigungsteils (4) mit einer Aufwickelnut (5) für ein Zugseil, wobei eine Klinke (19) mit einer Verzahnung (24) am Betätigungsteil (4) zum Aufwickeln des Zugseils zusammenwirkt, umfassend ferner eine Freigabe- und Haltemechanik, bestehend aus einem ersten Rastzahnsegment (8) und einem zweiten Rastzahnsegment (9), die mit dem Betätigungsteil (4) verbunden sind sowie aus einem Freigabehebel (10,10'), der mit dem ersten Rastzahnsegment (8) und dem zweiten Rastzahnsegment (9) wechselweise zusammenwirkt;
**dadurch gekennzeichnet,**
**dass** der Freigabehebel (10,10') eine erste Rastnase (11) und eine zweite Rastnase (12,12') als Bestandteil aufweist, die sich gemeinsam mit dem Freigabehebel bewegen,
die wechselseitig mit dem ersten Rastzahnsegment (8) einer ersten Rastscheibe (6) und dem zweiten Rastzahnsegment (9) einer zweiten Rastscheibe (7) zusammenwirken, wobei der Freigabehebel (10,10') schwenkbar auf einer Drehachse (15) gelagert ist, die im wesentlichen senkrecht zu der Mittelachse (16) gehäusefest angeordnet ist.

2. Schalter nach Anspruch 1,
**dadurch gekennzeichnet,**
**daß** die Drehachse (15) von der Mittelachse (16) einen Abstand aufweist, der den Radien der Rastzahnsegmente (8,9) im wesentlichen entspricht.

3. Schalter nach Anspruch 1 oder 2,
**dadurch gekennzeichnet,**
**daß** die Drehachse (15) etwa in der Mitte des Abstandes zwischen dem ersten Rastzahnsegment (8) und dem zweiten Rastzahnsegment (9) angeordnet ist.

4. Schalter nach einem der Ansprüche 1 bis 3,
**dadurch gekennzeichnet,**
**daß** der Freigabehebel (10,10') in Richtung Eingriff der zweiten Rastnase (12,12') gegenüber dem Gehäuse (3) angefedert ist.

5. Schalter nach einem der Ansprüche 1 bis 4,
**dadurch gekennzeichnet,**
**daß** der Freigabehebel (10') eine von diesem betätigbare Halteklinke (20) aufweist.

6. Schalter nach Anspruch 5,
**dadurch gekennzeichnet,**
**daß** die Rastnase (12') der Halteklinke (20) von einer Feder (22) in Richtung Eingriff mit dem zweiten Rastzahnsegment (9) vorgespannt ist.

7. Schalter nach einem der Ansprüche 5 bis 6,
**dadurch gekennzeichnet,**
**daß** der Freigabehebel (10,10') in seiner Ruhestellung einen Anschlag zum Gehäuse (1) und die Halteklinke (20) einen Anschlag (21) zum Freigabehebel (10') aufweisen.

8. Schalter nach Anspruch 7,
**dadurch gekennzeichnet,**
**daß** die Anfederungskraft auf den Freigabehebel (10') großer ist als die Anfederungskraft der Feder (22) auf den Anschlag (21) der Halteklinke (20).

9. Schalter nach Anspruch 1,
**dadurch gekennzeichnet,**
**daß** am Betätigungshebel (17) eine Klinke (19) schwenkbar angeordnet ist, die mit einer Verzahnung (24) zusammenwirkt, die mit dem Betätigungsteil (4) verbunden ist.

10. Schalter nach Anspruch 1 oder 9,
**dadurch gekennzeichnet,**
**daß** die Verzahnung (24) mit einer der beiden Rastscheiben (6,7) verbunden ist.

11. Schalter nach einem der Ansprüche 1, 9 oder 10,
**dadurch gekennzeichnet,**
**daß** die Verzahnung (24) einteilig mit der Rastscheibe (7) verbunden ist.

12. Schalter nach einem der Ansprüche 1, 9, 10 oder 11,
**dadurch gekennzeichnet,**
**daß** sich die Klinke (19) in Ruhestellung des Betätigungshebels (17) außer Eingriff mit der Verzahnung (24) befindet.

## Claims

1. Gear-change switch for bicycle gears, comprising an actuating lever (17), which is arranged rotatably about a central axis (16) fixed on the housing, for controlling an actuating part (4), which is likewise arranged rotatably about the central axis (16) in the housing (3) and has a coiling groove (5) for a traction cable, a pawl (19) interacting with a toothing (24) on the actuating part (4) for coiling up the traction cable, furthermore comprising a release and retaining mechanism, composed of a first latching tooth segment (8) and a second latching tooth segment (9) which are connected to the actuating part (4), and of a release lever (10, 10') which interacts in an alternating manner with a first latching tooth segment (8) and the second latching tooth segment (9), **characterized in that** the release lever (10, 10') has a first latching lug (11) and a second latching lug (12, 12') as components, the lugs moving together with the release lever and interacting alternately with the first latching tooth segment (8) of a first latching disc (6) and with the second latching tooth segment (9) of a second latching disc (7), the release lever (10, 10') being mounted pivotably on an axis of rotation (15) which is arranged fixed on the housing essentially perpendicular to the central axis (16).

2. Gear-change switch according to Claim 1, **characterized in that** the axis of rotation (15) is at a distance from the central axis (16) which essentially corresponds to the radii of the latching tooth segments (8, 9).

3. Gear-change switch according to Claim 1 or 2, **characterized in that** the axis of rotation (15) is arranged approximately in the centre of the distance between the first latching tooth segment (8) and the second latching tooth segment (9).

4. Gear-change switch according to one of Claims 1 to 3, **characterized in that** the release lever (10, 10') is initially sprung in the direction of engagement of the second latching lug (12, 12') with respect to the housing (3).

5. Gear-change switch according to one of Claims 1 to 4, **characterized in that** the release lever (10') has a retaining pawl (20) which can be actuated by it.

6. Gear-change switch according to Claim 5, **characterized in that** the latching lug (12') of the retaining pawl (20) is prestressed by a spring (22) in the direction of engagement with the second latching tooth segment (9).

7. Gear-change switch according to either of Claims 5 and 6, **characterized in that** the release lever (10, 10'), in its inoperative position, has a stop towards the housing (1) and the retaining pawl (20) has a stop (21) towards the release lever (10').

8. Gear-change switch according to Claim 7, **characterized in that** the spring-on force onto the release lever (10') is greater than the spring-on force of the spring (22) onto the stop (21) of the retaining pawl (20).

9. Gear-change switch according to Claim 1, **characterized in that** a pawl (19) is arranged pivotably on the actuating lever (17) and interacts with a toothing (24) which is connected to the actuating part (4).

10. Gear-change switch according to Claim 1 or 9, **characterized in that** the toothing (24) is connected to one of the two latching discs (6, 7).

11. Gear-change switch according to one of Claims 1, 9 or 10, **characterized in that** the toothing (24) is connected integrally to the latching disc (7).

12. Gear-change switch according to one of Claims 1, 9, 10 or 11, **characterized in that** the pawl (19) is disengaged from the toothing (24) in the inoperative position of the actuating lever (17).

## Revendications

1. Dispositif de commande pour dérailleur de bicyclette, comprenant un levier d'actionnement (17) disposé à rotation autour d'un axe médian (16) fixé au boîtier pour la commande d'une partie d'actionnement (4) disposée également à rotation autour de l'axe médian (16) dans le boîtier (3) avec une rainure d'enroulement (5) pour un câble de traction, un cliquet (19) coopérant avec une denture (24) sur la partie d'actionnement (4) pour l'enroulement du câble de traction, comprenant en outre un mécanisme de libération et de retenue, se composant d'un premier segment denté d'encliquetage (8) et d'un deuxième segment denté d'encliquetage (9) qui sont connectés à la partie d'actionnement (4) ainsi que d'un levier de libération (10, 10') qui coopère avec le premier segment denté d'encliquetage (8) et le deuxième segment denté d'encliquetage (9) en alternance, **caractérisé en ce que** le levier de libération (10, 10') présente un premier nez d'encliquetage (11) et un deuxième nez d'encliquetage (12, 12') en tant que composant, lesquels se déplacent conjointement avec le levier de libération, et coopèrent en alternance avec le premier segment denté d'encliquetage (8) d'un premier disque d'encliquetage (6) et avec le deuxième segment denté d'encliquetage (9) d'un deuxième disque d'encliquetage (7), le levier de libération (10, 10') étant monté à pivotement sur un axe de rotation (15), qui est disposé fixement par rapport au boîtier essentiellement perpendiculairement à l'axe médian (16).

2. Dispositif de commande selon la revendication 1,
**caractérisé en ce que**
l'axe de rotation (15) présente une distance à l'axe médian (16) qui correspond essentiellement aux rayons des segments dentés d'encliquetage (8, 9).

3. Dispositif de commande selon l'une quelconque des revendications 1 ou 2,
**caractérisé en ce que**
l'axe de rotation (15) est disposé approximativement au centre de la distance entre le premier segment denté d'encliquetage (8) et le deuxième segment denté d'encliquetage (9).

4. Dispositif de commande selon l'une quelconque des revendications 1 à 3,
**caractérisé en ce que**
le levier de libération (10, 10') est monté sur ressort dans la direction d'engagement du deuxième nez d'encliquetage (12, 12') par rapport au boîtier (3).

5. Dispositif de commande selon l'une quelconque des revendications 1 à 4,
**caractérisé en ce que**
le levier de libération (10') présente un cliquet de retenue (20) actionnable par celui-ci.

6. Dispositif de commande selon la revendication 5,
**caractérisé en ce que**
le riez d'encliquetage (12') du cliquet de retenue (20) est précontraint par un ressort (22) dans la direction d'engagement avec le deuxième segment denté d'encliquetage (9).

7. Dispositif de commande selon l'une quelconque des revendications 5 à 6,
**caractérisé en ce que**
le levier de libération (10, 10') présente, dans sa position de repos, une butée par rapport au boîtier (3) et le cliquet de retenue (20) présente une butée (21) par rapport au levier de libération (10').

8. Dispositif de commande selon la revendication 7,
**caractérisé en ce que**
la force de ressort est supérieure sur le levier de libération (10') à la force de ressort du ressort (22) sur la butée (21) du cliquet de retenue (20).

9. Dispositif de commande selon la revendication 1,
**caractérisé en ce que**
l'on dispose un cliquet (19) pouvant pivoter sur le levier d'actionnement (17), lequel coopère avec une denture (24) qui est connectée à la partie d'actionnement (4).

10. Dispositif de commande selon la revendication 1 ou 9,
**caractérisé en ce que**
la denture (24) est connectée à l'un des deux disques d'encliquetage (6, 7).

11. Dispositif de commande selon l'une quelconque des revendications 1, 9 ou 10,
**caractérisé en ce que**
la denture est connectée d'une seule pièce au disque d'encliquetage (7).

12. Dispositif de commande selon l'une quelconque des revendications 1, 9, 10 ou 11,
**caractérisé en ce que**
le cliquet (19) se trouve hors d'engagement avec la denture (24) lorsque le levier d'actionnement (17) est dans la position de repos.
